# EUROPÄISCHE PATENTSCHRIFT

(11) **EP 3 422 885 B1**
(45) Veröffentlichungstag und Bekanntmachung des Hinweises auf die Patenterteilung: **29.04.2020**
(21) Anmeldenummer: 17759331.6
(22) Anmeldetag: 01.02.2017
(51) Int. Cl.: B60Q 1/26, A42B 3/04, B62J 6/00

(54) **FAHRRADHELM MIT INTEGRIERTEN BLINKLEUCHTEN**
BICYCLE HELMET HAVING INTEGRATED INDICATOR LIGHTS
CASQUE DE CYCLISTE AVEC CLIGNOTANTS INTÉGRÉS

(30) Priorität: 01.03.2016 CN 201620154058 U
(43) Veröffentlichungstag der Anmeldung: 09.01.2019
(73) Patentinhaber: Zhang, Ming, Foshan, VR (CN)
(72) Erfinder: Zhang, Ming, Foshan, VR (CN)
(74) Vertreter: RGTH
(86) Internationale Anmeldenummer: PCT/IB2017/000067
(87) Internationale Veröffentlichungsnummer: WO 2017/149373

(56) Entgegenhaltungen:
- EP-A1- 2 862 748
- CN-A- 103 564 935
- CN-A- 103 783 708
- CN-A- 103 783 708
- CN-U- 201 602 195
- CN-U- 204 969 665
- CN-U- 204 969 665
- CN-U- 205 695 937
- CN-Y- 201 025 908
- JP-A- 2003 227 023
- JP-A- 2007 254 937
- US-A1- 2014 210 609
- US-B1- 6 784 795
- US-B1- 8 807 778

## Beschreibung

### Technisches Gebiet

Die vorliegende Erfindung betrifft ein Fahrradzubehör, genauer einen Fahrradhelm mit integrierten Blinkern.

### Technischer Hintergrund

Aus Gründen des Umweltschutzes fahren immer mehr Leute Fahrrad oder betreiben Radfahren als Sportart. Aber es besteht ein gewisses Sicherheitsrisiko während der Fahrradfahrt. Radfahrer tragen daher häufig einen Fahrradhelm zum Schutz des Kopfes vor möglichen Verletzungen. Bekannte Fahrradhelme werden normalerweise aus hochfesten Werkstoffen, wie z. B Metall, Baukunststoff, Kevlarfaser usw., hergestellt. Durch die Verformung dieser Werkstoffe wird der größte Teil der Aufprallkraft absorbiert, wodurch die Verletzung des Kopfes verringert wird und die Sicherheit und Gesundheit des Nutzers geschützt werden. Aber all diese Helme bieten erst dann einen Schutz, nachdem der Unfall bereits passiert ist. Bekannte Helme haben keine Fähigkeit zur Verhütung eines Unfalls. Insbesondere in der Nacht oder in dunkler Umgebung ist es für andere schwierig, die Fahrradposition und die Lenkabsicht des Radfahrers zu erkennen, weil das Fahrrad dunkel ist und meistens keine Lampe und keinen Blinker hat. In diesem Zusammenhang ist es möglich, dass der Fahrradfahrer durch andere Verkehrsteilnehmer verletzt wird.

Das Dokument CN 204969665 U beschreibt einen Fahrradhelm, wobei der Fahrradhelm einen Helmkörper, eine Schaltungssteuertafel, ein Lenklicht, eine Frontleuchte, eine Hinterwarnleuchte und ein Steuergerät umfasst.

In der US 2014/0210609 A1 wird ein Helm, umfassend einen abnehmbare Träger, eine Mehrzahl von lichtemittierenden Elementen, ein Gyroskop-Gerät, einen Prozessor zu Signalverarbeitung und Entscheidungsfindung und ein Leistungsgerät, beschrieben.

Die CN 103783708 A offenbart einen Schutzhelm, wobei zwei LED Lampen, ein Gyroskop und eine reflektierende Signalleuchte auf dem Helmkörper angeordnet sind, und wobei eine Stromversorgung auf der Helmkrempe angeordnet ist.

Die US 8807778 B1 beschreibt eine beleuchtete Helmanordnung für verbesserte Sichtbarkeit und erhöhende Sicherheit des Benutzers, wobei die Helmanordnung die beabsichtigte Fahrrichtung des Benutzers anzeigen kann.

In der EP 2862748 A1 wird eine Signalvorrichtung geeignet für Radfahrer für Anzeigen des Brems- und Lenksignals beschrieben. Die Signalvorrichtung wird in Form von Handschuhen offenbart.

In der US 6784795 B1 wird ein Brems- und Signallichtsystem für das Benutzen eines Fahrzeuges, z.B. eines Motorrads, und einen von dem Motorradfahrer tragenden Helm offenbart.

### Inhalt der Erfindung

Die Aufgabe dieser Erfindung besteht darin, die genannten Nachteile zu überwinden und einen Schutzhelm mit verbesserten Sicherheitsmerkmalen zu schaffen, der einfachen konstruiert, bequem zu tragen und zu niedrigen Kosten herzustellen ist.

Diese Aufgabe wird gelöst durch einen Fahrradhelm mit automatischer Brems- und Lenkanzeige, der einen Heimkörper aufweist, an dem jeweils vorne und hinten seitlich ein linker und rechter Blinker sowie eine Bremsleuchte vorgesehen sind. Der Fahrradhelm umfasst ferner ein Steuermodul, an dem die Blinker und die Bremsleuchte elektrisch angeschlossen sind, und ein kabelloses Empfangsmodul, das an dem Steuermodul angeschlossen ist.

Ferner ist ein kabelloses Fernsteuermodul vorgesehen, das mit dem kabellosen Empfangsmodul per Funk kommuniziert, wobei an dem kabellosen Fernsteuermodul eine Bremsprüfeinheit und eine manuelle Steuereinheit elektrisch angeschlossen sind, wobei die Bremsprüfeinheit bei Betätigung einer Radbremse, und die manuelle Steuereinheit bei Betätigung eines Blinker-Schalters ein entsprechendes Signal erzeugen, das über das kabellose Fernsteuermodul an den Fahrradhelm übertragen wird, um die Blinker anzusteuern, wobei ein Gyroskop vorgesehen ist, das an dem Steuermodul elektrisch angeschlossen ist, und wobei das Steuermodul eine Steuerkennzahl enthält, die größer als oder gleich zwei ist und vorzugsweise vom Nutzer nach Wunsch vorgegeben werden kann, und dass, wenn innerhalb eines gewissen Zeitraums eine Anzahl von Kopfbewegungen des Radfahrers in eine Richtung der Steuerkennzahl entspricht, der rechte oder linke Blinker und/oder die Bremsleuchte angesteuert wird.

Die Bremsleuchte ist vorzugsweise an einer hinteren mittleren Position des Heimkörpers vorgesehen.

Die sogenannte Bremsprüfeinheit umfasst z. B. einen am Bremsgriff vorgesehenen Lageschalter. Bei einer Betätigung des Bremsgriffes wird der Lageschalter ein- oder ausgeschaltet, so dass ein entsprechendes Steuersignal erzeugt wird.

Die sogenannte manuelle Steuereinheit umfasst z. B. eine am Handgriff vorgesehene Taste.

Für das kabellose Empfangsmodul und das kabellose. Fernsteuermodul wird vorzugsweise ein 2.4 G-Modul verwendet.

Der linke Blinker und der rechte Blinker sind vorzugsweise LED-Leuchten.

Die Bremsleuchte ist vorzugsweise ebenfalls eine LED-Leuchte.

Der Fahrradhelm umfasst zusätzlich auch ein Gyroskop bzw. einen Gyrosensor. In diesem Fall ist das Steuermodul mit dem Gyroskop elektrisch verbunden. Wenn der Radfahrer den Kopf nach links oder rechts bewegt, wird die Kopfbewegung vom Gyroskop erfasst und je nach Richtung und Anzahl der Kopfbewegungen entweder der rechte oder der linke Blinker angesteuert.

Die Vorteile eines solchen Fahrradhelms sind wie folgt: 1) Die Struktur und der Zusammenbau sind einfach und die Herstellungskosten sind niedrig 2) Am Helm ist ein Blinker vorgesehen. Beim Lenken kann der Radfahrer durch den Blinker den nachfolgenden Fahrzeugen einen Hinweis geben, damit die Sicherheit des Fahrers erhöht wird. 3) Auch beim Bremsen kann ein entsprechender Hinweis erfolgen. Neben der Erfüllung diese Anforderungen wird die Systemkomplexität so vereinfacht, dass der Marktvertrieb begünstigt wird. 4) Das Steuersystem kann auch über eine Drahtlosverbindung mit der Bremsprüfeinheit und der manuellen Steuereinheit kommunizieren, wodurch vermieden wird, dass ein Kabel die Fahrt des Radfahrers stört.

### Kurze Beschreibung der Zeichnungen

Die Erfindung wird nachstehend anhand der beigefügten Zeichnungen beispielhaft erläutert. Es zeigen:
Fig. 1: eine perspektivische Ansicht eines Fahrradhelms;
Fig. 2: eine Rückansicht des Fahrradhelms von Fig. 1;

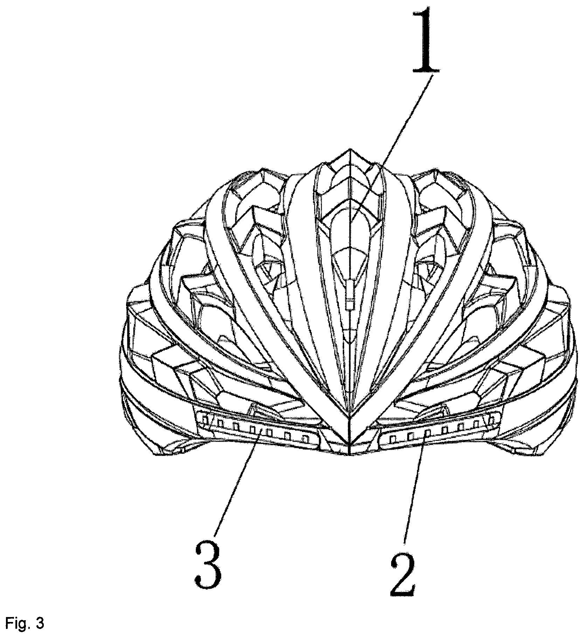

Fig. 3: eine Vorderansicht des Fahrradhelms von Fig. 1; und

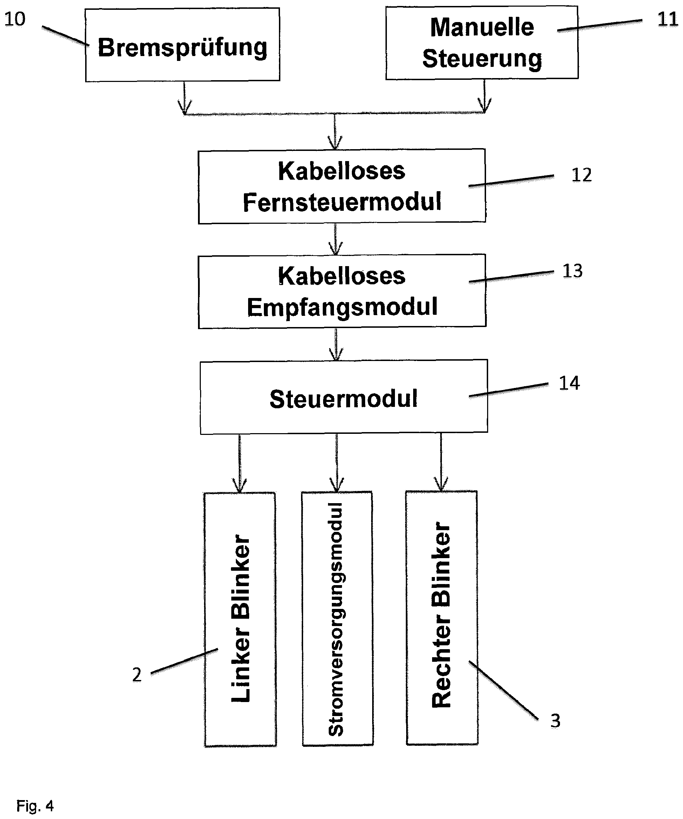

Fig. 4: eine schematische Darstellung eines Systems zum Steuern eines solchen Fahrradhelms.

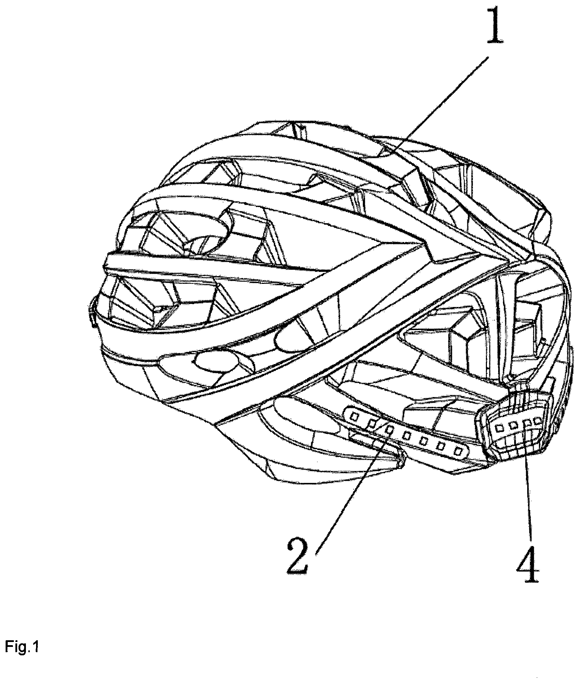

Fig. 1 zeigt einen Fahrradhelm mit automatischer Bremsanzeige und automatischer Lenkanzeige. Der Fahrradhelm umfasst einen Helmkörper 1, an dem jeweils vorne und hinten seitlich ein linker Blinker 2 und ein rechter Blinker 3 angeordnet sind. Außerdem ist am Fahrradhelm eine Bremsleuchte 4 vorgesehen. Die genannten Blinker 2, 3 und die Bremsleuchte 4 sind an einem Steuermodul 14 elektrisch angeschlossen. Die Blinker 2, 3 können z. B. aktiviert werden, wenn der Radfahrer von Hand einen Blinker setzt oder die Bremse betätigt. Die Bremsleuchte 4 wird angesteuert, wenn der Radfahrer die Bremse betätigt. Die Bedingung, unter der die Blinker 2, 3 oder die Bremsleuchte 4 angesteuert werden, ist im Prinzip frei vorgebbar.

Das Steuermodul 14 ist mit einem kabellosen Empfangsmodul 13 verbunden, das mit einem kabellosen Fernsteuermodul 12 kommuniziert. Das Steuermodul 14 und das kabellose Empfangsmodul 13 sind vorzugsweise im Fahrradhelm integriert. Das kabellose Fernsteuermodul 12 ist vorzugsweise am Fahrrad befestigt. An dem Fernsteuermodul 12 sind eine Bremsprüfeinheit 10 und eine manuelle Steuereinheit 11 elektrisch angeschlossen. Die Blinker 2, 3 können z. B. abhängig von einem Signal der Bremsprüfeinheit 10 und/oder der manuellen Steuereinheit 11 angesteuert werden.

Die sogenannte Bremsprüfeinheit 10 umfasst z.B. einen am Bremsgriff vorgesehenen Lageschalter. Bei einer Betätigung des Bremsgriffes wird der Lageschalter ein- oder ausgeschaltet, so dass ein entsprechendes Steuersignal erzeugt wird.

Die sogenannte manuelle Steuereinheit 11 umfasst z. B. eine am Handgriff vorgesehene Taste.

Für das kabellose Empfangsmodul 13 und das kabellose Fernsteuermodul 12 wird vorzugsweise ein 2.4 G-Modul verwendet.

Der linke Blinker 2 und der rechte Blinker 3 sind vorzugsweise LED-Leuchten.

Die Bremsleuchte 4 ist vorzugsweise ebenfalls eine LED-Leuchte.

Der Fahrradhelm umfasst zusätzlich auch ein Gyroskop bzw. einen Gyrosensor. In diesem Fall ist das Steuermodul 14 mit dem Gyroskop elektrisch verbunden. Wenn der Radfahrer den Kopf nach links oder rechts bewegt, wird die Kopfbewegung vom Gyroskop erfasst und je nach Richtung und Anzahl der Kopfbewegungen entweder der rechte oder der linke Blinker 2, 3 angesteuert.

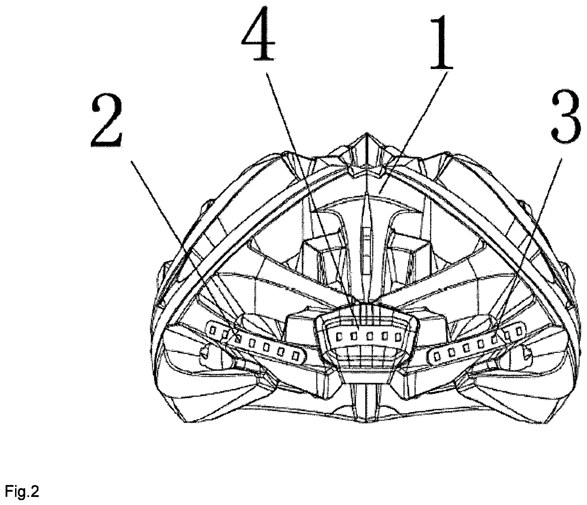

Die Funktionsweise des dargestellten Fahrradhelms wird im Folgenden beispielhaft näher erläutert. Wenn der Radfahrer den Bremsgriff beim Fahrrad fahren betätigt, um zu bremsen, wird ein daran vorgesehener Lageschalter eingeschaltet. Der Lageschalter erzeugt dann ein entsprechendes elektrisches Signal im System. Das kabellose Fernsteuermodul 12 sendet folglich ein elektrisches Signal aus, das von dem am Fahrradhelm vorgesehenen kabellosen Empfangsmodul 13 empfangen wird. Wenn das System entsprechend konfiguriert ist, leuchten z. B. der linke und rechte Blinker 2, 3 gleichzeitig, so dass das Bremssignal zu vorderen und hinteren Fahrzeugen gesendet wird. Neben den Blinkern 2, 3 umfasst der Fahrradhelm, wie in Fig. 2 dargestellt ist, auch eine Bremsleuchte 4. In diesem Fall leuchtet vorzugsweise auch die Bremsleuchte 4, wenn der Radfahrer das Fahrrad bremst.

Wenn der Radfahrer abbiegen möchte, kann erz. B. die manuelle Steuereinheit 11 am Lenker von Hand betätigen. So kann erz. B. einen Blinker- Schalter nach rechts drücken, um ein entsprechendes Signal zu erzeugen, das dann von dem kabellosen Empfangsmodul 13 empfangen wird. Das Steuermodul 14 steuert dann den rechten Blinker 3 an, so dass vor oder hinter dem Radfahrer befindliche Fahrzeuge das Blinksignal erkennen können. Somit wird die Fahrsicherheit des Anwenders erhöht.

Außerdem wird der Anwendungskomfort dadurch erhöht, dass im Fahrradhelm ein Gyroskop vorgesehen ist, das an der Steuerung 14 elektrisch angeschlossen ist. Die Steuerung 14 enthält eine bestimmte Steuerkennzahl, die größer als oder gleich zwei ist und vorzugsweise vom Nutzer nach Wunsch vorgegeben werden kann. Wenn der Radfahrer innerhalb eines gewissen Zeitraums zwei oder mehrmals in eine Richtung lenkt (entsprechend der Steuerkennzahl) oder den Kopf zwei oder mehrmals in eine Richtung bewegt, wird der Blinker 2, 3 in dieser Richtung gestartet. Alternativ oder zusätzlich kann das System auch derart ausgebildet sein, dass die Bremsleuchte 4 angesteuert wird, wenn der Radfahrer innerhalb eines gewissen Zeitraums zwei oder mehrmals den Kopf hebt oder senkt. Die genaue Art und Weise kann der Hersteller oder Nutzer nach eigenen Vorgaben entsprechend konfigurieren.

Das Grundprinzip und die Vorteile dieser Erfindung sind wie oben beschrieben. Dem Fachmann in dieser Branche ist bewusst, dass diese Erfindung nicht durch die oben genannten Ausführungsbeispiele eingeschränkt wird. Die oben genannten Ausführungsbeispiele und die Beschreibung dienen lediglich zur Erläuterung des Prinzips dieser Erfindung, wobei diese Erfindung gemäß den beiliegenden Ansprüchen noch geändert und verbessert werden kann, z. B. die Arbeitsweise des Blinkers und die Arten und Formen der Leuchte.

## Patentansprüche

1. Fahrradhelm mit automatischer Brems- und Lenkanzeige, der einen Helmkörper (1) aufweist, an dem jeweils vorne und hinten seitlich ein linker (2) und rechter Blinker (3) sowie eine Bremsleuchte (4) vorgesehen sind, wobei der Fahrradhelm ein Steuermodul (14), an dem die Blinker (2, 3) und die Bremsleuchte (4) elektrisch angeschlossen sind, ein kabelloses Empfangsmodul (13), das an dem Steuermodul (14) angeschlossen ist, und ein kabelloses Fernsteuermodul (12) umfasst, das mit dem kabellosen Empfangsmodul (13) per Funk kommuniziert, wobei an dem kabellosen Fernsteuermodul (12) eine Bremsprüfeinheit (10) und eine manuelle Steuereinheit (11) elektrisch angeschlossen sind, wobei die Bremsprüfeinheit (10) bei Betätigung einer Radbremse, und die manuelle Steuereinheit (11) bei Betätigung eines Blinker-Schalters ein entsprechendes Signal erzeugen, das über das kabellose Fernsteuermodul (12) an den Fahrradhelm übertragen wird, um die Blinker (2, 3) anzusteuern,
**dadurch gekennzeichnet, dass**
der Fahrradhelm ein Gyroskop umfasst, das an dem Steuermodul (14) elektrisch angeschlossen ist,
dass das Steuermodul (14) eine Steuerkennzahl enthält, die größer als oder gleich zwei ist und vorzugsweise vom Nutzer nach Wunsch vorgegeben werden kann, und dass, wenn innerhalb eines gewissen Zeitraums eine Anzahl von Kopfbewegungen des Radfahrers in eine Richtung der Steuerkennzahl entspricht, der rechte oder linke Blinker (2, 3) und/oder eine Bremsleuchte (4) angesteuert wird.

2. Fahrradhelm mit automatischer Brems- und Lenkanzeige nach Anspruch 1, **dadurch gekennzeichnet, dass** die Bremsprüfeinheit (10) einen an einem Bremsgriff vorgesehenen Schalter umfasst.

3. Fahrradhelm mit automatischer Brems- und Lenkanzeige nach Anspruch 1, **dadurch gekennzeichnet, dass** die manuelle Steuereinheit (11) eine an einem Handgriff vorgesehene Steuertaste umfasst.

4. Fahrradhelm mit automatischer Brems- und Lenkanzeige nach Anspruch 1, **dadurch gekennzeichnet, dass** die Bremsleuchte (4) an einer hinteren mittleren Position des Helmkörpers (1) vorgesehen ist.

5. Fahrradhelm mit automatischer Brems- und Lenkanzeige nach Anspruch 1, **dadurch gekennzeichnet, dass** ein 2.4 G-Modul für das kabellose Empfangsmodul (13) und das kabellose Fernsteuermodul (12) verwendet wird.

6. Fahrradhelm mit automatischer Brems- und Lenkanzeige nach Anspruch 1, **dadurch gekennzeichnet, dass** der linke Blinker (2) und der rechte Blinker (3) als LED-Leuchten ausgebildet sind.

7. Fahrradhelm mit automatischer Brems- und Lenkanzeige nach Anspruch 4, **dadurch gekennzeichnet, dass** die Bremsleuchte (4) als LED-Leuchte ausgebildet ist.

## Claims

1. A bicycle helmet with an automatic braking and steering indicator which has a helmet body (1), on the respective front and rear sides of which a left (2) and a right (3) direction indicator as well as a brake light (4) are provided, wherein the bicycle helmet comprises a control module (14) to which the direction indicators (2, 3) and the brake light (4) are electrically coupled, a wireless receiving module (13) which is coupled to the control module (14), and a wireless remote control module (12) which communicates with the wireless receiving module by radio, wherein a brake check unit (10) and a manual control unit (11) are electrically coupled to the wireless remote control module (12), wherein the brake check unit (10), in the event of the actuation of a bicycle brake, and the manual control unit (11), in the event of the actuation of an direction indicator switch, generate a respective signal which is transmitted to the bicycle helmet via the wireless remote control module (12) in order to activate the direction indicators (2, 3), **characterized in that** the bicycle helmet comprises a gyroscope which is electrically connected to the control module (14), **in that** the control module contains a control index number which is larger than or equal to two and can be preferably predetermined by the user as desired, and **in that** the right or left direction indicator (2, 3) and / or the brake light (4) is activated if a number of head movements of the cyclist in one direction within a certain time period corresponds to the control index number.

2. A bicycle helmet with an automatic braking and steering indicator according to claim 1, **characterized in that** the brake check unit (10) comprises a switch provided at a brake handle.

3. A bicycle helmet with an automatic braking and steering indicator according to claim 1, **characterized in that** the manual control unit (11) comprises a control key provided at a handlebar.

4. A bicycle helmet with an automatic braking and steering indicator according to claim 1, **characterized in that** the brake light (4) is provided in the rear middle position of the helmet body (1).

5. A bicycle helmet with an automatic braking and steering indicator according to claim 1, **characterized in that** a 2.4 G module is used for the wireless receiving module (13) and the wireless remote control module (12).

6. A bicycle helmet with an automatic braking and steering indicator according to claim 1, **characterized in that** the left direction indicator (2) and right direction indicator (3) are configured as LED lights.

7. A bicycle helmet with an automatic braking and steering indicator according to claim 4, **characterized in that** the brake light (4) is configured as LED light.

## Revendications

1. Casque de cycliste à afficheur automatique de frein et de direction, qui présente un corps de casque (1) au niveau duquel un clignotant gauche (2) et un clignotant droit (3) sont respectivement prévus latéralement à l'avant et à l'arrière, de même qu'un feu de frein (4), le casque de cycliste comprenant un module de commande (14) auquel les clignotants (2, 3) et le feu de frein (4) sont raccordés électriquement, un module de réception sans câble (13) qui est raccordé au module de commande (14), et un module de télécommande sans fil (12) qui communique par radio avec le module de réception sans câble (13), une unité de contrôle de frein (10) et une unité de commande manuelle (11) étant raccordées électriquement au module de télécommande sans câble (12), l'unité de contrôle de frein (10), en cas d'actionnement de frein de roue, et l'unité de commande manuelle (11), en cas d'actionnement d'un interrupteur de clignotant, générant un signal correspondant qui est transmis par l'intermédiaire du module de télécommande sans câble (12) au casque de cycliste afin de commander les clignotants (2, 3),
**caractérisé en ce que**
le casque de cycliste comprend un gyroscope qui est raccordé électriquement au module de commande (14),
**que** le module de commande (14) contient une caractéristique de commande qui est supérieure ou égale à deux et peut de préférence être prédéfinie par un utilisateur à volonté et que, si, pendant une durée déterminée, un certain nombre de mouvements de la tête du cycliste dans une direction correspondent à la caractéristique de commande, le clignotant droit ou gauche (2, 3) et/ou un feu de frein (4) sont commandés.

2. Casque de cycliste à afficheur automatique de frein et de direction selon la revendication 1, **caractérisé en ce que** l'unité de contrôle de frein (10) comprend un interrupteur prévu au niveau d'une poignée de frein.

3. Casque de cycliste à afficheur automatique de frein et de direction selon la revendication 1, **caractérisé en ce que** l'unité de commande manuelle (11) comprend une touche de commande prévue au niveau de la poignée.

4. Casque de cycliste à afficheur automatique de frein et de direction selon la revendication 1, **caractérisé en ce que** le feu de frein (4) est prévu au niveau d'une position médiane arrière du corps de casque (1).

5. Casque de cycliste à afficheur automatique de frein et de direction selon la revendication 1, **caractérisé en ce qu'**un module 2.4 G est utilisé pour le module de réception sans câble (13) et le module de télécommande sans câble (12).

6. Casque de cycliste à afficheur automatique de frein et de direction selon la revendication 1, **caractérisé en ce que** le clignotant gauche (2) et le clignotant droit (3) se présentent sous forme de voyants LED.

7. Casque de cycliste à afficheur automatique de frein et de direction selon la revendication 4, **caractérisé en ce que** le feu de frein (4) se présente sous forme de voyant LED.
